# EUROPÄISCHE PATENTSCHRIFT

(11) **EP 1 213 105 B1**
(45) Veröffentlichungstag und Bekanntmachung des Hinweises auf die Patenterteilung: **13.09.2006**
(21) Anmeldenummer: 01127614.4
(22) Anmeldetag: 20.11.2001
(51) Int. Cl.: B26D 5/02, A24C 5/28

(54) **Schneidvorrichtung und Verfahren zum Wechseln von Schneidmitteln**
Apparatus and method for changing cutting means
Dispostif ainsi que procédé pour changer d'outil de coupe

(30) Priorität: 06.12.2000 DE 10060552
(43) Veröffentlichungstag der Anmeldung: 12.06.2002
(73) Patentinhaber: Hauni Maschinenbau AG, 21033 Hamburg (DE)
(72) Erfinder: Dombek, Manfred, 21521 Dassendorf (DE)
(74) Vertreter: Seemann, Ralph

(56) Entgegenhaltungen:
- EP-A1- 0 335 181
- EP-A1- 0 677 360
- DE-A1- 4 008 475
- DE-A1- 4 446 766
- DE-C- 392 948
- DE-C- 940 699
- DE-U1- 8 906 343
- US-A1- 4 090 424

## Beschreibung

Die Erfindung betrifft eine Schneidvorrichtung zum Schneiden von Artikeln der Tabak verarbeitenden Industrie, insbesondere von Zigaretten, mit einer Trägervorrichtung, auf der wenigstens zwei als Kreismesser ausgebildete Schneidmittel an wenigstens zwei verschiedenen Stellen der Trägervorrichtung lösbar anbringbar sind. Die Erfindung betrifft ferner ein Verfahren zum Wechseln von Schneidmitteln, mit denen stabförmige Artikel der Tabak verarbeitenden Industrie geschnitten werden, wobei die Schneidmittel auf einer Trägervorrichtung einer Schneidvorrichtung angeordnet sind.

Eine derartige Vorrichtung bzw. Verfahren ist aus dem Dokument DE-C-392 948 bekannt, welches als nächstliegender Stand der Technik betrachtet wird.

Bei Maschinen zur Herstellung von stabförmigen Artikeln der Tabak verarbeitenden Industrie und insbesondere von Zigaretten, wie beispielsweise bei einer Filteransetzmaschine, sind diverse Schneidvorgänge z.B. Schneidvorgänge an Filterstäben und Zigaretten, auszuführen.

Bekannte Schneidvorrichtungen weisen ein Kreismesser auf, das in Eingriff mit stabförmigen Artikeln der Tabak verarbeitenden Industrie bringbar ist und üblicherweise mittels einer Schleifscheibe ständig geschärft wird. Durch das Benutzen des Kreismessers und das ständige Schärfen geht Material des Kreismessers verloren. Das Kreismesser ist bis zu einem minimalen Durchmesser verwendbar. Danach muss dieses ausgetauscht werden. Zum Austausch wird üblicherweise die Maschine zur Herstellung von stabförmigen Artikeln der Tabak verarbeitenden Industrie angehalten und das Kreismesser von einer Bedienperson per Hand ausgetauscht. Eine geübte Bedienperson benötigt hierzu 2 Minuten. Ein derartiger Wechsel von Messern ist demgemäß relativ zeitaufwändig.

Das Dokument DE-C-940 699 offenbart eine Vorrichtung zum Durchschneiden von Filterstäben zur Herstellung von Filtermundstückzigaretten. Die Filterstäbe werden der Schneidvorrichtung längsaxial zugeführt und durch Kreismesser zerschnitten, die auf einer rotierenden Trägervorrichtung planetartig umlaufend angeordnet sind. Je nach Anzahl der verwendeten Kreismesser werden unterschiedliche Gebrauchslängen der Filterstäbe erreicht. Weiterhin sind Schleifkörper vorgesehen, die zum Schleifen und Entgraten der Kreismesser dienen. Zum Austausch der Kreismesser wird die Vorrichtung angehalten und die Kreismesser von einer Bedienperson per Hand ausgetauscht.

In DE-U-89 06 343 ist eine Spaltvorrichtung zum Trennen von selbstklebenden Folienbändern offenbart. Darin wird ein einzelnes, erheblich größeres Spaltmesser als üblich verwendet, wodurch Stillstandszeiten für einen notwendigen Wechsel des Spaltmessers wesentlich verkürzt werden.

Es ist daher eine Aufgabe der vorliegenden Erfindung, eine effektive und schnelle Möglichkeit des Wechselns von Schneidmitteln vorzusehen und eine entsprechende Schneidvorrichtung sowie ein Verfahren zum Wechseln von Schneidmitteln vorzusehen, das relativ schnell vonstatten gehen kann, so dass die Ausfallzeit der Maschine zur Herstellung von stabförmigen Artikeln der Tabak verarbeitenden Industrie möglichst gering ist.

Gelöst wird diese Aufgabe durch eine Schneidvorrichtung zum Schneiden von stabförmigen Artikeln der Tabak verarbeitenden Industrie, insbesondere von Zigaretten, mit einer Trägervorrichtung, auf der wenigstens zwei als Kreismesser ausgebildete Schneidmittel an wenigstens zwei verschiedenen Stellen der Trägervorrichtung lösbar anbringbar ist, die dadurch weitergebildet ist, dass mit der Trägervorrichtung ein erstes Schneidmittel in eine erste Position, die einer Arbeits- oder Schneidposition entspricht, in der bei stillstehender Trägervorrichtung Schnitte ausführbar sind, linear bewegbar, verdrehbar oder verschwenkbar ist und in einer zweiten Position das wenigstens eine zweite Schneidmittel vorrätig ist, das bei Erreichen eines vorgebbaren Abstumpfwerts oder eines vorgebbaren Verkleinerungswerts des ersten Schneidmittels zum Austausch des ersten Schneidmittels aus der zweiten Position in die erste Position linear bewegbar, verdrehbar oder verschwenkbar ist.

Durch diese erfindungsgemäße Lösung ist es möglich, die Schneidmittelwechselzeit dadurch zu minimieren, dass die Bedienperson schon vor Erreichen eines vorgebbaren minimalen Durchmessers des gerade in Gebrauch befindlichen Schneidmittels wenigstens ein weiteres Schneidmittel auf der Trägervorrichtung anbringen kann, so dass zumindest der Zeitraum des Anbringens beim Schneidmittelwechsel gespart werden kann. Vorzugsweise schneidet nur jeweils ein Schneidmittel zur Zeit, während das weitere Schneidmittel oder die weiteren Schneidmittel nacheinander in Eingriff mit den stabförmigen Artikeln gebracht werden. Durch die erfindungsgemäße Lösung ist es insbesondere möglich, die Maschine zur Herstellung von stabförmigen Artikeln der Tabak verarbeitenden Industrie beim Wechsel der Schneidmittel weiterlaufen zu lassen. Der Austausch bzw. der Wechsel von einem Schneidmittel zum auf dem Träger angeordneten neuen Schneidemittel kann dann sehr schnell durch nur einen Handgriff an der Schneidvorrichtung oder einer automatischen Bewegung der Schneidvorrichtung erfolgen. Durch die Verwendung von Kreismessern als Schneidmittel ergibt sich eine hohe Lebensdauer der jeweiligen Kreismesser.

Bei einer verschwenkbar und/oder drehbar gelagerten Trägervorrichtung liegt die Drehachse bzw. die Schwenkachse hierbei insbesondere in einem geometrischen Mittelpunkt der auf dem Träger angeordneten Schneidmittel, wodurch eine sehr schnelle Auswechselung oder eine sehr schnelle Verschwenkung von Schneidmitteln möglich ist.

Wenn vorzugsweise die Schneidmittel auf einer Schlittenführung angeordnet sind, mittels der ein Heranführen jeweils wenigstens eines Schneidmittels in den Wirkbereich der stabförmigen Artikel der Tabak verarbeitenden Industrie möglich ist, ist eine besonders einfach zu realisierende Schneidevorrichtung gegeben. Hierbei kann beispielsweise an eine Schlittenführung gedacht werden, die in einer Art linearen Heranführung oder auf einer gebogenen Bahn neue Schneidmittel in den Wirkbereich der stabförmigen Artikel bringt, um diese nach Benutzung bzw. Abnutzung des jeweiligen Schneidmittels wieder aus dem Wirkbereich herauszubefördern, wobei die gesamte Bewegung hierzu taktförmig linear oder auf einer gebogenen Bahn in eine Richtung geschehen kann. Hierbei handelt es sich insbesondere um ein First in - First out-Prinzip (FiFo). Wenn vorzugsweise die Schlittenführung ein Kreuzschlitten ist, kann eine besonders genaue Justage der Schneidmittel erzielt werden.

Vorzugsweise sind die Kreismesser wenigstens im Wirkbereich drehbar um eine Drehachse gelagert. Ferner vorzugsweise ist eine Schärfvorrichtung vorgesehen, mittels der das im Wirkbereich angeordnete Schneidmittel schärfbar ist. Die Schärfvorrichtung umfasst vorzugsweise ein oder zwei Schleifteller, die in den Bereich des Schneidmittels gebracht werden können. Vorzugsweise ist ein gemeinsamer Drehteller als Trägervorrichtung vorgesehen, auf dem die Schneidmittel angeordnet sind. Hierbei sind vorzugsweise 3 Schneidmittel auf einem Drehteller in einer symmetrischen Anordnung aufbringbar. Durch diese vorzugsweise Ausgestaltung der Erfindung kann durch alleinige Drehbewegung des Trägers eine Wirkverbindung von dem einen Schneidmittel zum nächsten Schneidmittel erzielt werden. Bei der vorzugsweisen Kreuzführung handelt es sich insbesondere um eine Führung, die in 2 Richtungen Bewegungselemente aufweist bzw. eine Mimik aufweist, die die Bewegungen in einer Ebene ermöglicht. Vorzugsweise werden neue Schleifmittel in einer fixierten Position der Trägervorrichtung auf die Trägervorrichtung aufgebracht bzw. angebracht. Es handelt sich hierbei vorzugsweise um eine Position, in der ein Schneidmittel im Wirkbereich mit den stabförmigen Artikeln der Tabak verarbeitenden Industrie ist. Das Entfernen bzw. ein Auswerfen gebrauchter Schneidmittel geschieht vorzugsweise auch in der fixierten Position der Trägervorrichtung. Das Anbringen und Demontieren bzw. Auswerfen von Schneidmitteln kann manuell geschehen oder vorzugsweise automatisch durch weitere Vorrichtungen. Bei einer manuellen Handhabung sind vorzugsweise Sicherheitsvorkehrungen getroffen, um die Bewegung der Trägervorrichtung zu blockieren, wenn eine manuelle Betätigung an der Trägervorrichtung durch Anbringen oder Entfernen von Schneidmitteln geschieht.

Die Aufgabe wird ferner durch ein Verfahren zum Wechseln von Schneidmitteln mit den Merkmalen des Anspruches 6, mit denen stabförmige Artikel der Tabak verarbeitenden Industrie geschnitten werden, wobei die Schneidmittel auf einer Trägervorrichtung einer erfindungsgemäßen Schneidvorrichtung angeordnet sind, gelöst, wobei das Verfahren die folgenden Verfahrensschritte aufweist:
- Ausführen einer Bewegung des Entfernens des ersten Schneidmittels aus dem Wirkbereich, und
- Ausführen einer Bewegung des Einbringens eines zweiten Schneidmittels in den Wirkbereich, wobei vor der Bewegung des Entfernens des ersten Schneidmittels aus dem Wirkbereich das zweite Schneidmittel auf den Träger aufgebracht wird.

Durch Ausführen der erfindungsgemäßen Verfahrensschritte ist ein besonders schnelles Wechseln von Schneidmitteln möglich, und zwar dergestalt, dass die Standzeiten einer Maschine zur Herstellung von stabförmigen Artikeln der Tabak verarbeitenden Industrie und insbesondere von Zigaretten möglichst niedrig gehalten werden.

Vorzugsweise findet im Vorwege der Verfahrensschritt des Ausführens einer Bewegung des Einbringens eines ersten Schneidmittels in den Wirkbereich der stabförmigen Artikel, statt.

Vorzugsweise findet als nächster Verfahrensschritt ein Entfernen bzw. Abnehmen des ersten Schneidmittels von der Trägervorrichtung statt. Das Aufbringen und/oder Abnehmen kann vorzugsweise automatisch geschehen. Durch das erfindungsgemäße Verfahren wird eine Art Vorrat von benutzungsfertigen Schneidmitteln und insbesondere von benutzungsfertigen Kreismessern angelegt, wodurch durch schnelle Bewegungen das gerade in Benutzung befindliche Schneidmittel durch ein frisches weiteres Schneidmittel ausgetauscht werden kann.

Eine besonders einfache Verfahrensführung ist dann gegeben, wenn vorzugsweise die Einbringbewegung und die Entfernbewegung Schwenkbewegungen um eine gemeinsame Schwenkachse sind. Hierbei ist insbesondere vorzugsweise eine Rotationssymmetrie der Schneidmittel gegeben. Insbesondere finden 3 Schneidmittel Verwendung, die vorzugsweise in einer Art dreizähliger Symmetrie um eine Drehachse der Trägervorrichtung angeordnet sind.

Vorzugsweise ist die Einbringbewegung und die Entfernbewegung eine Bewegung auf einer durch einen Schlitten vorgegebenen Bahn. Vorzugsweise ist die Bahn eine geschlossene Bahn. Vorzugsweise sind die Bewegungen getaktet, wobei eine Taktperiode der Zeitdauer entspricht, die von dem Zeitpunkt des Einbringens eines Schneidmittels in den Wirkbereich bis zum Erreichen eines vorgebbaren Abstumpfwerts oder eines durch Schärfen des Schneidmittels verursachten und vorgebbaren Verkleinerungswerts des Schneidmittels läuft. Innerhalb dieser Taktperiode können neue Schneidmittel angebracht bzw. gebrauchte Schneidmittel entfernt werden.

Wenn vorzugsweise die Bewegungen während des Betriebs einer Maschine zur Herstellung von stabförmigen Artikeln der Tabak verarbeitenden Industrie geschehen, ist es nicht mehr notwendig, die Maschine selbst zum Austausch der Schneidmittel anzuhalten. Auf diese Weise ist es möglich, den Wechsel von einem gebrauchten Schneidmittel zu einem neuen Schneidmittel im Eingriffsbereich mit den stabförmigen Artikeln der Tabak verarbeitenden Industrie innerhalb einer Zeitperiode vorzunehmen, in der z.B. lediglich 10 stabförmige Artikel ungeschnitten vorbeilaufen. Bei einer Anzahl von beispielsweise 16.000 hergestellten Zigaretten pro Minute entspricht das Zeitintervall zum Wechseln des Schneidmittels somit ungefähr 19 Millisekunden. Vorzugsweise werden die beim Wechsel der Schneidmittel nicht geschnittenen stabförmigen Artikel in einem weiteren Verfahrensschritt ausgeworfen.

Erfindungsgemäß ist eine Maschine zur Herstellung von stabförmigen Artikeln der Tabak verarbeitenden Industrie mit wenigstens einer Schneidvorrichtung der erfindungsgemäßen bzw. vorzugsweisen Ausgestaltung der Erfindung versehen, gemäß der Merkmale des Anspruchs 13. Mit einer derartigen Maschine werden vorzugsweise Zigaretten hergestellt.

Die Erfindung wird nachstehend ohne Beschränkung des allgemeinen Erfindungsgedankens anhand von Ausführungsbeispielen unter Bezugnahme auf die Zeichnungen beschrieben, auf die im übrigen bezüglich aller im Text nicht näher erläuterten erfindungsgemäßen Einzelheiten ausdrücklich verwiesen wird. Es zeigen
- Fig. 1: eine schematische Darstellung einer Vorrichtung zum Herstellen von Filterzigaretten in Vorderansicht,
- Fig. 2: eine schematische Darstellung eines Teils einer entsprechenden Vorrichtung zum Herstellen von Filterzigaretten, und
- Fig. 3: einen Ausschnitt aus Fig. 2, wobei Komponenten aus der Fig. 2 verschwenkt wurden.

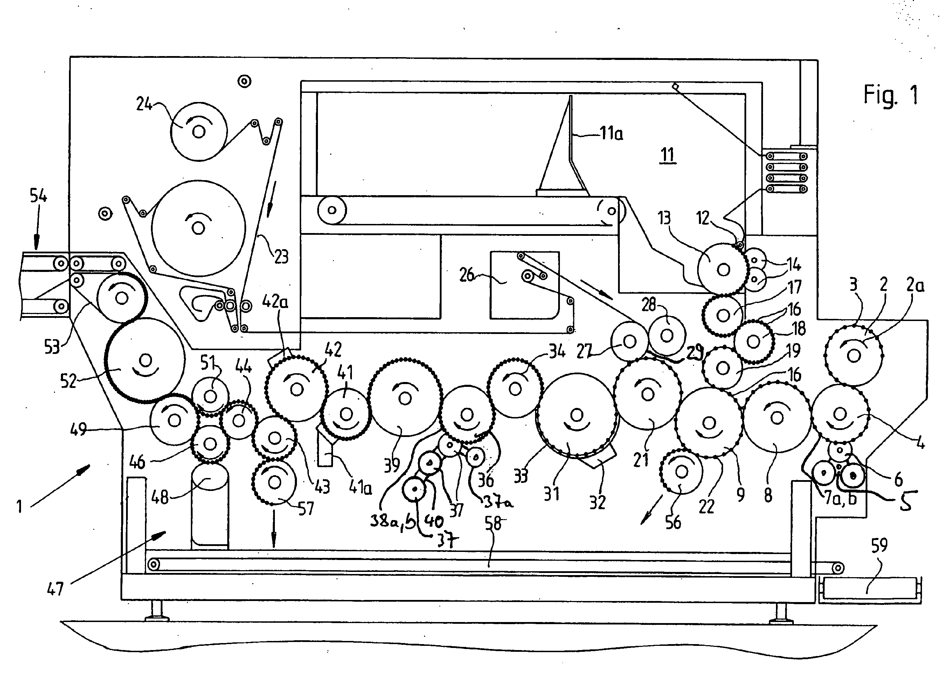

In Fig. 1 ist eine Vorrichtung gemäß der Erfindung zum Herstellen von Filterzigaretten, insbesondere eine Filteransetzmaschine 1, in einer Vorderansicht dargestellt.

Eine Übernahmetrommel 2 übernimmt Artikel 3 doppelter Gebrauchslänge von einer nicht dargestellten Zigarettenstrangmaschine, beispielsweise vom Typ PROTOS der Anmelderin. Eine entsprechende Vorrichtung zum Herstellen von Filterzigaretten ist beispielsweise aus der Patentanmeldung DE 400 84 75 A1 der Anmeldein, die der US-PS 5 135 008 entspricht, an sich bekannt. In Fig. 1 sind allerdings einige Merkmale der in der DE 400 84 75 A1 offenbarten Merkmale variiert.

Auf der Übernahmetrommel 2 werden die Artikel im queraxialen Abstand mit einem Mitten- oder Teilungsabstand in Richtung eines Pfeils 2a gefördert und an eine Schneidtrommel 4 übergeben, auf der sie mittels eines Kreismessers 6 in zwei gleichlange Einzelartikel 7a und 7b zerschnitten werden.

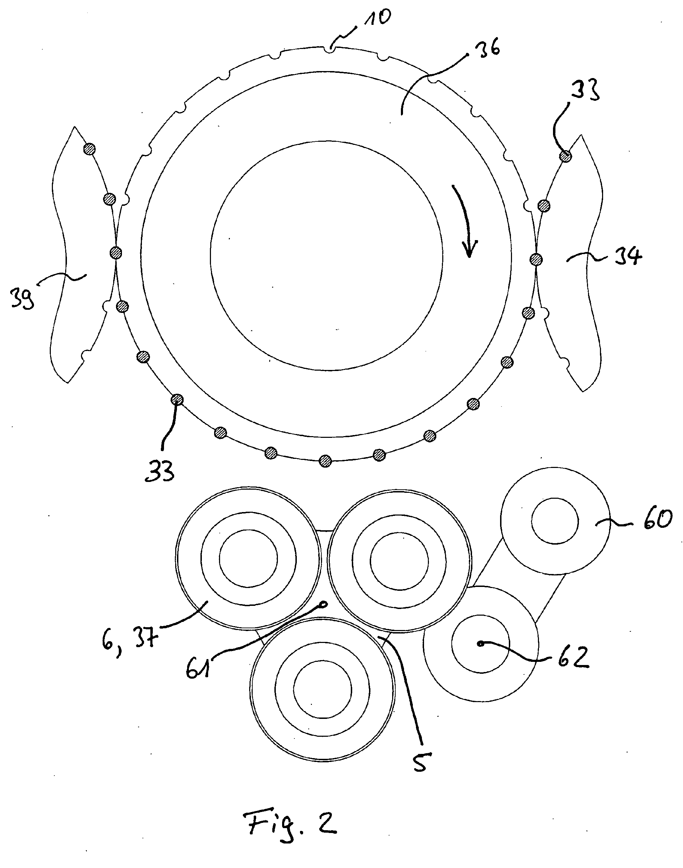

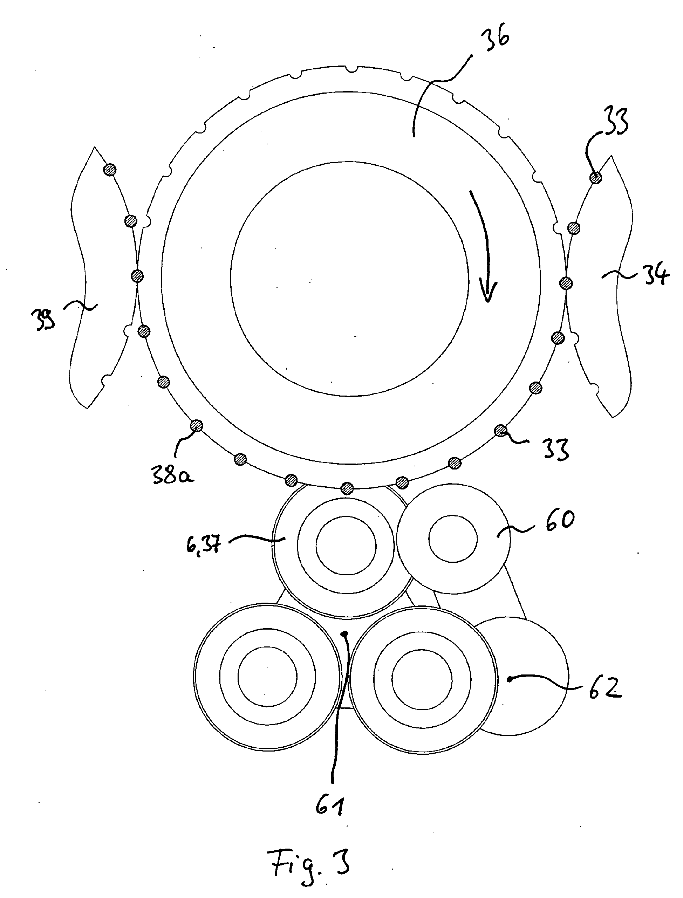

Das Kreismesser 6 ist auf einem Träger 5 bzw. einer Kreismesserhalterung 5 angeordnet. Eine Schleifvorrichtung ist vorgesehen, um das Kreismesser 6, das im Wirkbereich mit den Artikeln 3 doppelter Gebrauchslänge steht, ständig zu schärfen. Diese Schleifvorrichtung ist in Fig. 1 nicht dargestellt. Eine entsprechende Schleifvorrichtung ist beispielsweise in den Fig. 2 und 3 offenbart. Nachdem das Kreismesser 6 durch das Schneiden und Schleifen entsprechend im Durchmesser verkleinert wurde, so dass ein vorgebbarer minimaler Durchmesser erreicht ist, kann durch einfaches schnelles Verdrehen der Kreismesserhalterung 5 um 120° um eine Schwenkachse 61, die in den Fig. 2 und 3 dargestellt ist, ein neues Kreismesser in den Wirkbereich der Artikel 3 gebracht werden. Anschließend kann das gebrauchte Kreismesser 6 gegen ein neues Kreismesser ausgetauscht werden:

Auf einer Spreiztrommel 8 werden dann die Einzelartikel axial auseinander bewegt, so dass zwischen ihnen ein axialer Abstand entsteht. Die auseinander gezogenen Einzelartikel 7a und 7b werden einer Zusammenstelltrommel 9 übergeben. Aus einem Magazin 11, dessen Volumen durch Verfahren einer Rückwand 11a veränderbar ist, gelangen Filterstäbe 12 auf eine Schneidtrommel 13, werden von 2 Kreismessern 14 zu Filterstopfen 16 doppelter Gebrauchslänge geschnitten, auf einer Staffeltrommel 17 gestaffelt, von einer Schiebetrommel 18 zu einer Reihe hintereinander liegender Stopfen ausgerichtet und von einer Beschleunigertrommel 19 in die Zwischenräume der Zigarettenreihen auf der Zusammenstelltrommel 9 abgelegt. Die Kreismesser 14 können jeweils auch gemäß der Erfindung schnell ausgetauscht werden. Eine entsprechende Vorrichtung ist allerdings in Fig. 1 an der Stelle, wo die Kreismesser 14 angeordnet sind, nicht dargestellt. Die Komponentengruppen bzw. Zigarette-Filter-Zigarette-Gruppen 22 werden zusammengeschoben, so dass sie axial dicht an dicht liegen und anschließend von einer Übergabetrommel 21 übernommen werden.

Ein Belagpapierstreifen 23 wird von einer Belagpapierbobine 24 abgezogen. Der Belagpapierstreifen 23 wird von einer Beleimvorrichtung 26 beleimt und auf einer Belagwalze 27 von einer Messertrommel 28 in aufeinander folgende Belagblättchen 29 zerschnitten. Die Belagblättchen werden nacheinander an aufeinander folgende Zigaretten-Filter-Gruppen auf der Übergabetrommel 21 angeheftet und auf einer Rolltrommel 31 mittels einer Rollhand 32 um die Zigaretten-Filter-Gruppen herumgerollt.

Die fertigen Doppelfilterzigaretten 33 werden über eine Zwischentrommel 34 einer Schneidtrommel 36 zugeführt und auf dieser mittels eines Kreismessers 37 durch mittiges Schneiden durch die Filterstopfen hindurch zu Einzelfilterzigaretten 38a und 38b konfektioniert. Das Kreismesser 37 ist hier auf einer Schiene angeordnet. Ferner sind 2 weitere Kreismesser 37 auf der Kreismesserführung 40 noch nicht benutzt. Es ist ferner auf der Kreismesserführung 40 im rechten Teil ein benutztes Kreismesser 37a dargestellt, dass nun in dieser Position abnehmbar ist. An diesem Kreismesser 37a ist der verkleinerte Durchmesser im Vergleich zu dem Kreismesser 37 angedeutet. Vorzugsweise erstreckt sich die Kreismesserführung 40 nicht nur in der in Fig. 1 dargestellten Ebene, sondern auch in einer nicht dargestellten dahinter liegenden Ebene, um eine Art Endloskreismesserführung zu erreichen.

Die Einzelzigaretten 38a und 38b werden auf einer Spreiztrommel 39 axial auseinander bewegt, so dass sie einen axialen Abstand b voneinander haben. Auf 2 folgenden Prüftrommeln 41 und 42 werden die Einzelfilterzigaretten 38a und 38b in 2 Reihen auf die Einhaltung vorgegebener Qualitätsmerkmale geprüft. Dafür sind den Prüftrommeln 41 und 42 Prüfeinrichtungen 41 a und 42a zugeordnet. Bei den Prüfeinrichtungen 41a kann es sich beispielsweise um Einrichtungen für die Kopfabtastung der Zigaretten handeln. Mit den Prüfeinrichtungen 42a, bei denen es sich um bekannte pneumatische Prüfeinrichtungen handeln kann, werden Qualitätsmerkmale der Zigaretten wie Dichtigkeit der Umhüllung, Ventilationsgrad, Zugwiderstand und dergleichen bestimmt. Prüfeinrichtungen dieser Art sind bekannt und brauchen hier nicht näher beschrieben zu werden.

Die geprüften Zigaretten 38a und 38b werden dann in 2 Reihen auf eine Zwischentrommel 43 übergeben, von der sie zu einer Übergabetrommel 44 gelangen. Eine Zigarettenreihe gelangt von der Übergabetrommel 44 auf eine weitere Zwischentrommel 46, die die Zigaretten dieser Reihe an eine Umorientierungseinrichtung 47 abgibt. Im dargestellten Fall ist diese Umorientierungseinrichtung als Kegelwender 48 ausgebildet, der die axiale Orientierung der in dieser Reihe geförderten Zigaretten umkehrt und in Übereinstimmung mit der axialen Orientierung der Zigaretten der anderen Reihe bringt. Kegelwender dieser Art sind an sich bekannt und benötigen daher hier keine nähere Beschreibung. Hingewiesen wird in diesem Zusammenhang beispielsweise auf den in der DE-OS 20 20 138 beschriebenen Kegelwender.

Die umorientierten Zigaretten werden von dem Kegelwender 48 axial versetzt wieder an die Zwischentrommel 46 oder eine axial versetzte gleiche Trommel abgegeben, die sie zu einer Sammeltrommel 49 überführt und dort nacheinander in jede zweite Mulde bzw. Aufnahme 10 der Sammeltrommel ablegt, so dass zwischen aufeinander folgenden Zigaretten auf der Sammeltrommel 49 jeweils eine Aufnahme frei bleibt. In diese freien Aufnahmen zwischen den gewendeten Zigaretten legt eine weitere Zwischentrommel 51 die von der Übergabetrommel 44 übernommenen nicht gewendeten Zigaretten der zweiten Reihe ab. Die Zigaretten werden nun in gleicher axialer Orientierung in einer Reihe über eine Zwischentrommel 52 zu einem Ablegerband 53 gefördert, von dem sie in einer einzigen einlagigen Reihe an einen Massenstromförderer 54 abgegeben werden.

Mit 56 und 57 sind 2 Entnahmetrommeln bezeichnet, mit denen aus dem Artikelstrom fehlerhafte oder auf Wunsch auch ordnungsgemäße Zigaretten bzw. Doppelzigaretten entnommen und auf ein Förderband 58 abgeworfen werden können, das sie auf einen Sammelförderer 59 übergibt, von wo sie zur Prüfung ins Labor oder in den Ausschuss gefördert werden können.

Fig. 2 zeigt einen Teil einer entsprechenden Vorrichtung zum Herstellen von Filterzigaretten. Von einer Zwischentrommel 34 werden Doppelfilterzigaretten 33 auf eine Schneidtrommel 36 übergeben, die in Pfeilrichtung dreht. Die Aufnahmen 10 werden hierbei durch die Doppelfilterzigaretten 33 bestückt. In Fig. 2 ist eine erfindungsgemäße Variante dargestellt, bei der 3 Kreismesser 6 bzw. 37 auf einer Kreismesserhalterung 5 in Art eines Dreiecks angeordnet sind. Um durch Drehung über die Schwenkachse 61 von einem Kreismesser fluchtend zum danebenliegenden Kreismesser zu gelangen, muss die Kreismesserhalterung 5 um 120° gedreht werden. In Fig. 2 ist eine Darstellung gewählt, in der kein Kreismesser 6 bzw. 37 in Eingriff mit den Doppelfilterzigaretten 33 steht. Aus diesem Grund werden in diesem Fall die Doppelfilterzigaretten ohne geschnitten zu werden der Spreiztrommel 39 übergeben bzw. von der Spreiztrommel 39 oder dem Bereich hinter den jeweiligen Kreismessern 6 bzw. 37 von der Schneidtrommel 36 entnommen.

Um ein ständig scharfes Kreismesser 6 zur Verfügung zu stellen, ist eine Schleifvorrichtung vorgesehen, die zwei koaxiale Schleifscheiben 60 umfasst, die auf einer Halterung angeordnet sind, die selbst um eine Schwenkachse 62 verschwenkbar ist. In Fig. 2 ist eine Position der Schleifscheiben 60 dargestellt, bei der diese nicht in Eingriff mit einem Kreismesser 6 steht.

Fig. 3 zeigt den gleichen Ausschnitt aus der Vorrichtung zum Herstellen von Filterzigaretten wie Fig. 2, wobei allerdings ein Kreismesser 6 bzw. 37 im Wirkbereich mit den Doppelfilterzigaretten steht und diese entsprechend in Einzelzigaretten zerschneidet. Links von dem sich in der Wirkposition befindenden Kreismesser 6 bzw. 37 befinden sich somit in den Aufnahmen 10 Einzelzigaretten 38a, wobei weitere Einzelzigaretten 38b dahinter angeordnet sind und nicht in Fig. 3 dargestellt sind. In dieser Position des Kreismessers 6 bzw. 37 sind auch die Schleifscheiben 60 in die Schärfeposition eingeschwenkt. Die erfindungsgemäße Schneidvorrichtung kann an verschiedenste Stellen von Maschinen zur Herstellung von stabförmigen Artikeln der Tabak verarbeitenden Industrie eingesetzt bzw. angeordnet werden, und zwar bevorzugt an denjenigen Stellen, an denen stabförmige Artikel und insbesondere Zigaretten geschnitten werden sollen. Die Schleifscheibe bzw. die Schleifscheiben werden über die Schwenkachse 62 sowohl bei entsprechendem Verschleiß zugestellt als auch bei einem Messerwechsel aus- und wieder eingeschwenkt. Die Messer können über die jeweiligen Drehachsen der Messer gleichzeitig oder aber nur in der entsprechenden Arbeitsposition angetrieben werden. Hierzu wird dann eine entsprechende Kupplung verwendet. Ein möglicherweise gewünschter Schleifscheiben-Antrieb kann beispielsweise über die Schwenkachse erfolgen. Zum Wechseln des Kreismessers 6 werden vorzugsweise die Schleifscheiben 60 außer Eingriff geschwenkt, um dann nach dem Wechseln des Messers 6 diese wieder in Eingriff zu schwenken. Zum Nachschleifen wird vorzugsweise eine Zustellbewegung verwendet. Ein bevorzugtes Kreismesser 6, das ungebraucht ist, hat beispielsweise einen Durchmesser von 100 mm, wohingegen ein Durchmesser von 75 mm ein vorzugsweise vorgebbarer Wert ist, um ein Wechseln des Kreismessers zu initiieren. Vorzugsweise wird eine Überwachungseinrichtung verwendet, die den Durchmesser bzw. den Rand oder die Schneide des sich im Wirkbereich befindlichen Messers misst. Hierzu kann ein optisches Instrument wie beispielsweise eine Laserdiode mit einem entsprechenden fotoempfindlichen Detektor Verwendung finden, wobei diese beiden Elemente auf entgegengesetzten Seiten des Messers angeordnet sind oder ein Messinstrument Verwendung findet, das einen elektrischen Widerstand misst.

## Patentansprüche

1. Schneidvorrichtung zum Schneiden von stabförmigen Artikeln (3, 7a, 7b, 16, 22, 33) der Tabak verarbeitenden Industrie, insbesondere von Zigaretten, mit einer Trägervorrichtung (5, 40), auf der wenigstens zwei als Kreismesser ausgebildete Schneidmittel (6, 14, 37) an wenigstens zwei verschiedenen Stellen der Trägervorrichtung (5, 40) lösbar anbringbar sind, **dadurch gekennzeichnet, dass** mit der Trägervorrichtung ein erstes Schneidmittel (6, 14, 37) in eine erste Position, die einer Arbeits- oder Schneidposition entspricht, in der bei stillstehender Trägervorrichtung (5, 40) Schnitte ausführbar sind, linear bewegbar, verdrehbar oder verschwenkbar ist und in einer zweiten Position das wenigstens eine zweite Schneidmittel (6, 14, 37) vorrätig ist, das bei Erreichen eines vorgebbaren Abstumpfwerts oder eines vorgebbaren Verkleinerungswerts des ersten Schneidmittels (6, 14, 37) zum Austausch des ersten Schneidmittels (6, 14, 37) aus der zweiten Position in die erste Position linear bewegbar, verdrehbar oder verschwenkbar ist.

2. Schneidvorrichtung nach Anspruch 1, **dadurch gekennzeichnet, dass** die Schneidmittel (6, 14, 37) auf einer Schlittenführung (40) angeordnet sind, mittels der ein Heranführen jeweils wenigstens eines Schneidmittels (6, 14, 37) in den Wirkbereich der stabförmigen Artikel (3, 7a, 7b, 16, 22, 33) der Tabak verarbeitenden Industrie ermöglicht ist.

3. Schneidvorrichtung nach Anspruch 1 oder 2, **dadurch gekennzeichnet, dass** die Schlittenführung (40) ein Kreuzschlitten ist.

4. Schneidvorrichtung nach einem oder mehreren der Ansprüche 1 bis 3, **dadurch gekennzeichnet, dass** die Kreismesser wenigstens im Wirkbereich drehbar um eine Drehachse gelagert sind.

5. Schneidvorrichtung nach einem oder mehreren der Ansprüche 1 bis 4, **dadurch gekennzeichnet, dass** eine Schärfvorrichtung (60) vorgesehen ist, mittels der das im Wirkbereich angeordnete Schneidmittel (6, 14, 37) schärfbar ist.

6. Verfahren zum Wechseln von Schneidmitteln (6, 14, 37), mit denen stabförmige Artikel (3, 7a, 7b, 16, 22, 33) der Tabak verarbeitenden Industrie geschnitten werden, wobei die Schneidmittel (6, 14, 37) auf einer Trägervorrichtung (5, 40) einer Schneidvorrichtung nach einem der Patentansprüche 1 bis 5 angeordnet sind, mit den folgenden Verfahrensschritten:
- Ausführen einer Bewegung des Entfernens des ersten Schneidmittels (6, 14, 37) aus dem Wirkbereich, und
- Ausführen einer Bewegung des Einbringens eines zweiten Schneidmittels (6, 14, 37) in den Wirkbereich, wobei vor der Bewegung des Entfernens des ersten Schneidmittels (6, 14, 37) aus dem Wirkbereich das zweite Schneidmittel (6, 14, 37) auf den Träger (5, 40) aufgebracht wird.

7. Verfahren nach Anspruch 6, **dadurch gekennzeichnet, dass** die Einbringbewegung und die Entfernbewegung eine Schwenkbewegung um eine gemeinsame Schwenkachse (61) ist.

8. Verfahren nach Anspruch 6, **dadurch gekennzeichnet, dass** die Einbringbewegung und die Entfernbewegung eine Bewegung auf einer durch einen Schlitten (40) vorgegebenen Bahn ist.

9. Verfahren nach einem oder mehreren der Ansprüche 6 bis 8, **dadurch gekennzeichnet, dass** die Bewegungen getaktet sind, wobei eine Taktperiode der Zeitdauer von dem Einbringen eines Schneidmittels in den Wirkbereich bis zu dem Zeitpunkt, bei dem ein vorgebbarer Abstumpfwert oder ein durch Schärfen des Schneidmittels verursachter und vorgebbarer Verkleinerungswert dieses Schneidmittels erreicht ist, entspricht.

10. Verfahren nach einem oder mehreren der Ansprüche 6 bis 9, **dadurch gekennzeichnet, dass** die Bewegungen während des Betriebs einer Maschine zur Herstellung von stabförmigen Artikeln (3, 7a, 7b, 16, 22, 33) der Tabak verarbeitenden Industrie geschehen.

11. Verfahren nach Anspruch 10, **dadurch gekennzeichnet, dass** die beim Wechsel der Schneidmittel (6, 14, 37) nicht geschnittenen stabförmigen Artikel (3, 7a, 7b, 16, 22, 33) in einem weiteren Verfahrensschritt ausgeworfen werden.

12. Verfahren nach einem oder mehreren der Ansprüche 6 bis 11, **dadurch gekennzeichnet, dass** im Vorwege der folgende Verfahrensschritt ausgeführt wird:
- Ausführen einer Bewegung des Einbringens eines ersten Schneidmittels (6, 14, 37) in den Wirkbereich der stabförmigen Artikel (3, 7a, 7b, 16, 22, 33).

13. Maschine zur Herstellung von stabförmigen Artikeln der Tabak verarbeitenden Industrie mit wenigstens einer Schneidvorrichtung nach einem oder mehreren der Ansprüche 1 bis 5.

## Claims

1. Cutting device for cutting rod-shaped articles (3, 7a, 7b, 16, 22, 33) of the tobacco-processing industry, particularly cigarettes, having a carrier device (5, 40) on which at least two cutting means (6, 14, 37) constructed as circular knives can be detachably mounted at at least two different points of the carrier device (5, 40), **characterised in that**, with the carrier device, a first cutting means (6, 14, 37) can be linearly movable, rotatable or pivotable into a first position, which corresponds to an operating or cutting position in which cutting can take place when the carrier device (5, 40) is stationary, and the at least one second cutting means (6, 14, 37) is held ready in a second position, said cutting means being linearly movable, rotatable or pivotable from the second position into the first position for replacing the first cutting means (6, 14, 37) when a pre-determinable bluntness value or a pre-determinable size reduction value for the first cutting means (6, 14, 37) has been reached.

2. Cutting device according to Claim 1, **characterised in that** the cutting means (6, 14, 37) are arranged on a slideway (40) by means of which at least one cutting means (6, 14, 37) in each case can be guided into the operating region of the rod-shaped articles (3, 7a, 7b, 16, 22, 33) of the tobacco-processing industry.

3. Cutting device according to Claim 1 or 2, **characterised in that** the slideway (40) is a cross slide.

4. Cutting device according to one or more of Claims 1 to 3, **characterised in that** the circular knives are mounted such that they are rotatable about an axis of rotation at least in the operating region.

5. Cutting device according to one or more of Claims 1 to 4, **characterised in that** a sharpening device (60) is provided, by means of which the cutting means (6, 14, 37) arranged in the operating region can be sharpened.

6. Process for replacing cutting means (6, 14, 37) which are used to cut rod-shaped articles (3, 7a, 7b, 16, 22, 33) of the tobacco-processing industry, in which the cutting means (6, 14, 37) are arranged on a carrier device (5, 40) of a cutting device according to one of Claims 1 to 5, having the following process steps:
- executing a movement for removing the first cutting means (6, 14, 37) from the operating region, and
- executing a movement for introducing a second cutting means (6, 14, 37) into the operating region, where the second cutting means (6, 14, 37) is applied to the carrier (5, 40) before the movement for removing the first cutting means (6, 14, 37) from the operating region.

7. Process according to Claim 6, **characterised in that** the introducing movement and the removing movement is a pivotal movement about a common pivot axis (61).

8. Process according to Claim 6, **characterised in that** the introducing movement and the removing movement is a movement on a path which is predetermined by a slide (40).

9. Process according to one or more of Claims 6 to 8, **characterised in that** the movements are clocked, with one clock period corresponding to the length of time between introducing a cutting means into the operating region and the time of reaching a pre-determinable bluntness value or a pre-determinable size reduction value for this cutting means, which is the result of sharpening the cutting means.

10. Process according to one or more of Claims 6 to 9, **characterised in that** the movements take place during the operation of a machine for manufacturing rod-shaped articles (3, 7a, 7b, 16, 22, 33) of the tobacco-processing industry.

11. Process according to Claim 10, **characterised in that** the rod-shaped articles (3, 7a, 7b, 16, 22, 33) which are not cut during the replacement of the cutting means (6, 14, 37) are ejected in a further process step.

12. Process according to one or more of Claims 6 to 11, **characterised in that** the following process step is carried out in advance:
- executing a movement for introducing a first cutting means (6, 14, 37) into the operating region of the rod-shaped articles (3, 7a, 7b, 16, 22, 33).

13. Machine for manufacturing rod-shaped articles of the tobacco-processing industry having at least one cutting device according to one or more of Claims 1 to 5.

## Revendications

1. Dispositif de coupe destiné à couper des articles en forme de tige (3, 7a, 7b, 16, 22, 33) de l'industrie de transformation du tabac, notamment des cigarettes, comprenant un dispositif de support (5, 40), sur lequel au moins deux organes de coupe (6, 14, 37), conçus sous forme de couteaux circulaires, peuvent être montés amovibles en au moins deux endroits différents du dispositif de support (5, 40), **caractérisé en ce qu'**à l'aide du dispositif de support, un premier organe de coupe (6, 14, 37) peut être déplacé en translation linéaire, en rotation ou par pivotement, dans une première position, qui correspond à une position de travail ou de coupe, dans laquelle des coupes peuvent être réalisées, le dispositif de support (5, 40) étant alors immobilisé, alors que, dans une deuxième position, est placé en réserve le au moins un deuxième organe de coupe (6, 14, 37) qui, lorsqu'une valeur d'émoussage prédéfinissable ou une valeur de diminution prédéfinissable du premier organe de coupe (6, 14, 37) est atteinte, peut être déplacé en translation linéaire, en rotation ou par pivotement, de la deuxième position dans la première position, en vue du remplacement du premier organe de coupe (6, 14, 37).

2. Dispositif de coupe selon la revendication 1, **caractérisé en ce que** les organes de coupe (6, 14, 37) sont disposés sur un guide à chariot (40), au moyen duquel un rapprochement d'au moins un organe de coupe respectif (6, 14, 37) des articles en forme de tige (3, 7a, 7b, 16, 22, 33) de l'industrie de transformation du tabac, dans la zone d'action, est rendu possible.

3. Dispositif de coupe selon la revendication 1 ou 2, **caractérisé en ce que** le guide à chariot (40) est un chariot en croix.

4. Dispositif de coupe selon une ou plusieurs des revendications 1 à 3, **caractérisé en ce que** les couteaux circulaires sont montés à rotation autour d'un axe de rotation, au moins dans la zone d'action.

5. Dispositif de coupe selon une ou plusieurs des revendications 1 à 4, **caractérisé en ce qu'**il est prévu un dispositif d'affûtage (60), au moyen duquel l'organe de coupe (6, 14, 37) disposé dans la zone d'action peut être affûté.

6. Procédé pour changer des organes de coupe (6, 14, 37), à l'aide desquels des articles en forme de tige (3, 7a, 7b, 16, 22, 33) de l'industrie de transformation du tabac sont coupés, les organes de coupe (6, 14, 37) étant disposés sur un dispositif de support (5, 40) d'un dispositif de coupe selon l'une des revendications 1 à 5, procédé comprenant les étapes suivantes:
- exécution d'un déplacement du premier organe de coupe (6, 14, 37) l'éloignant de la zone d'action, et
- exécution d'un déplacement d'un deuxième organe de coupe (6, 14, 37) l'introduisant dans la zone d'action, le deuxième organe de coupe (6, 14, 37) étant mis en place sur le support (5, 40) avant le déplacement du premier organe de coupe (6, 14, 37) l'éloignant de la zone d'action.

7. Procédé selon la revendication 6, **caractérisé en ce que** le déplacement d'introduction et le déplacement d'éloignement consistent chacun en un déplacement par pivotement autour d'un axe de pivotement commun (61).

8. Procédé selon la revendication 6, **caractérisé en ce que** le déplacement d'introduction et le déplacement d'éloignement consistent chacun en un déplacement sur une trajectoire prédéfinie par un chariot (40).

9. Procédé selon une ou plusieurs des revendications 6 à 8, **caractérisé en ce que** les déplacements sont cycliques, une période de cycle correspondant alors à la durée de l'intervalle de temps allant de l'introduction d'un organe de coupe dans la zone d'action jusqu'à l'instant auquel est atteinte une valeur d'émoussage prédéfinissable ou une valeur de diminution de l'organe de coupe, prédéfinissable et occasionnée par l'affûtage de l'organe de coupe.

10. Procédé selon une ou plusieurs des revendications 6 à 9, **caractérisé en ce que** les déplacements se font durant l'exploitation d'une machine pour la fabrication d'articles en forme de tige (3, 7a, 7b, 16, 22, 33) de l'industrie de transformation du tabac.

11. Procédé selon la revendication 10, **caractérisé en ce que** les articles en forme de tige (3, 7a, 7b, 16, 22, 33), qui ne sont pas coupés lors du changement des organes de coupe (6, 14, 37), sont éjectés dans une étape ultérieure du procédé.

12. Procédé selon une ou plusieurs des revendications 6 à 11, **caractérisé en ce qu'**au préalable, l'étape suivante du procédé est exécutée:
- exécution d'un déplacement d'un premier organe de coupe (6, 14, 37) l'introduisant dans la zone d'action sur les articles en forme de tige (3, 7a, 7b, 16, 22, 33).

13. Machine pour la fabrication d'articles en forme de tige de l'industrie de transformation du tabac comportant au moins un dispositif de coupe selon une ou plusieurs des revendications 1 à 5.
